# EUROPÄISCHE PATENTSCHRIFT

(11) **EP 0 712 437 B1**
(45) Veröffentlichungstag und Bekanntmachung des Hinweises auf die Patenterteilung: **08.10.1997**
(21) Anmeldenummer: 94924286.1
(22) Anmeldetag: 25.07.1994
(51) Int. Cl.: C11D 3/00, C11D 17/06, C11D 11/00

(54) **SCHAUMREGULATORGRANULAT UND VERFAHREN ZU SEINER HERSTELLUNG**
FOAM REGULATING GRANULATE AND PROCESS FOR PRODUCING THE SAME
GRANULE REGULATEUR DU MOUSSAGE ET SON PROCEDE DE PREPARATION

(30) Priorität: 02.08.1993 DE 4325881; 23.12.1993 DE 4344155
(43) Veröffentlichungstag der Anmeldung: 22.05.1996
(73) Patentinhaber: Henkel Kommanditgesellschaft auf Aktien, 40191 Düsseldorf (DE)
(72) Erfinder: BLOCK, Christian, D-50733 Köln (DE); LARSON, Bernd, D-41812 Erkelenz (DE); SEITER, Wolfgang, D-41469 Neuss (DE); ASSMANN, Georg, D-41363 Jüchen (DE); GREGER, Manfred, D-40599 Düsseldorf (DE); JACOBS, Jochen, D-42349 Wuppertal (DE); PAWELCZYK, Hubert, D-40229 Düsseldorf (DE); FILECCIA, Salvatore, D-46049 Oberhausen (DE); RATHKE, Jens, D-40233 Düsseldorf (DE); BÖCKER, Monika, D-42799 Leichlingen (DE)
(86) Internationale Anmeldenummer: EP9402451
(87) Internationale Veröffentlichungsnummer: WO9504124

(56) Entgegenhaltungen:
- EP-A- 0 309 931
- EP-A- 0 414 221
- WO-A-91/12306
- WO-A-92/20770
- DE-A- 4 240 166
- FR-A- 2 462 184
- FR-A- 2 559 400

## Beschreibung

Die Erfindung betrifft granulare Schaumregulatoren, die Entschäumerwirkstoff, insbesondere auf Basis Silikon- und/oder Paraffin, sowie anorganisches und/oder organisches Trägermaterial enthalten und ein hohes Schüttgewicht aufweisen, ihre Verwendung in Wasch- und Reinigungsmitteln sowie ein Verfahren zu ihrer Herstellung durch Extrusion.

Teilchenförmige Wasch- und Reinigungsmittel enthalten zur Regulierung der Schaumentwicklung üblicherweise Entschäumerwirkstoffe, die oft als separate Teilchen konfektioniert werden und den übrigen, in Form eines oder mehrerer Pulver konfektionierten Inhaltsstoffe zugemischt werden.

Aus der deutschen Offenlegungsschrift DT 22 32 262 sind Schaumbekämpfungsmittel bekannt, die aus pulverförmigem oder granuliertem Natriumtripolyphosphat bestehen, das an seiner Oberfläche einen organopolysiloxanhaltigen Entschäumer aufweist. Diese Mittel werden durch einfaches Vermischen des Phosphat-Trägermaterials, das insbesondere als vorgefertigtes wasserfreies Granulat eingesetzt wird, mit der Organopolysiloxankomponente, die insbesondere in Form einer wäßrigen Emulsion zum Einsatz kommt, hergestellt. Wegen ihres hohen Phosphatgehalts sind derartige Mittel für den Einsatz in modernen Wasch- oder Reinigungsmitteln obsolet.

In der deutschen Offenlegungsschrift DT 24 02 955 wird vorgeschlagen, statt des oben erwähnten Tripolyphosphats ein frei fließendes, pulverförmiges oder kristallines Natriumperborat als Trägermaterial für Organopolysiloxane zu verwenden.

Aus der europäischen Patentanmeldung EP 0 008 829 sind feste Waschmittel bekannt, die ein Schaumkontrollierungssystem aus Wachs, hydrophobiertem Kieselgel, bestimmten nichtionischen Dispergierungsmitteln und gegebenenfalls Silikonen enthalten, das in inniger Mischung mit den übrigen Waschmittelbestandteilen vorliegt. Dabei kann das zuvor verflüssigte Schaumkontrollierungssystem auf ein vorgefertigtes, insbesondere sprühgetrocknetes Trägerkorn, das alle oder einen Teil der übrigen Waschmittelbestandteile enthält, aufgesprüht werden. Ein derartiges Herstellungsverfahren ist durch seine Mehrstufigkeit relativ aufwendig.

Aus der deutschen Offenlegungsschrift DE 34 36 194 ist ein Verfahren zur Herstellung schüttfähiger Entschäumergranulate durch Sprühtrocknung einer wäßrigen Dispersion, die wasserunlöslichen Entschäumer, anorganisches Trägersalz und bestimmte Celluloseethergemische enthalten, bekannt. Ein derartiges Verfahren kann durch die thermische Belastung unter Sprühtrocknungsbedingungen insbesondere bei Verwendung von Organopolysiloxanen zu Produkten führen, die nicht in allen Fällen optimale Entschäumerleistung aufweisen.

Die Verwendung von Bisamiden als Entschäumer für Waschmittel ist aus der deutschen Offenlegungsschrift DT 20 43 087 bekannt. Die dort genannten Rezepturen besitzen jedoch keine gleichmäßige Entschäumerwirkung über einen großen Temperaturbereich.

EP-A2-0 414 221 beschreibt ein durch Extrusion hergestelltes Entschäumergranulat, das eine mittlere Korngröße von 0,8 mm aufweist, wobei 5 % der Teilchen eine Größe von mindestens 1 mm und 5 % der Teilchen ein Größe von höchstens 0,25 mm besitzen. Das bevorzugte Schüttgewicht liegt im Bereich von 450 g/l bis 650 g/l. WO-A1-92/20770 beschreibt ein durch Aufbaugranulation und WO-A1-91/12306 ein durch Sprühtrocknung hergestelltes Entschäumergranulat mit höherem Schüttgewicht. Die so hergestellten Granulate sind jedoch so feinkörnig, daß wesentlich mehr als 6 Gew.-% der Teilchen eine Korngröße unter 0.2 mm aufweisen.

In der europäischen Patentschrift EP 87 233 wird ein Verfahren zur Herstellung eines schwachschäumenden Waschmittels beschrieben, bei dem Gemische aus einer öligen beziehungsweise wachsartigen Substanz und Bisamiden auf ein Trägerpulver, insbesondere ein sprühgetrocknetes tensidhaltiges Waschmittel aufgetragen werden. Die ölige beziehungsweise wachsartige Substanz kann zum Beispiel aus Vaseline mit einem Schmelzpunkt von 20 °C bis 120 °C bestehen. In den Beispielen wird für diesen Zweck Mineralöl eingesetzt. Offensichtlich dient diese Komponente in erster Linie als Träger- beziehungsweise Dispergiermittel für das Bisamid. Bei dieser Art der Konfektionierung, nämlich dem Aufsprühen des Mittels auf das sprühgetrocknete. tensidhaltige Waschmittel besteht die Gefahr. daß sich das Herstellungsverfahren nachteilig auf die Lagerbeständigkeit der Schaumregulierungskomponente auswirkt mit dem Ergebnis. daß deren Aktivität mit zunehmender Lagerzeit abnimmt. Um ihre Wirkung zu steigern und gleichzeitig die erforderliche Anwendungskonzentration herabzusetzen, werden diesen Entschäumern häufig weitere bekannte Schauminhibitoren zugesetzt, insbesondere Polysiloxane oder Polysiloxan-Kieselsäure-Gemische. Weitere Bisamide enthaltende Schaumregulatoren sind aus den europäischen Patentschriften EP 75 433 und EP 94 250 bekannt. Aus der deutschen Offenlegungsschrift DT 28 57 155 sind Waschmittel mit einem Schaumregulierungsmittel bekannt, das hydrophobes Siliziumdioxid und ein Gemisch aus festen und flüssigen Kohlenwasserstoffen, gegebenenfalls im Gemisch mit Fettsäureestern, enthält. Durch den hohen Gehalt an bei Raumtemperatur flüssigem Kohlenwasserstoff von 22,5 Gew.-% bis etwa 98 Gew.-% besteht bei derartigen Schaumregulierungsmitteln die Gefahr des Verklumpens. In der europäischen Patentanmeldung EP 309 931 werden Schaumregulierungsmittel beschrieben, welche ein relativ aufwendiges Gemisch aus Paraffinwachs und mikrokristallinem Paraffinwachs enthalten. Derartige Mittel weisen bei der in neuerer Zeit immer mehr Bedeutung gewinnenden maschinellen Wäsche im Niedrigtemperaturbereich in manchen Fällen eine als unzureichend empfundene Entschäumerleistung auf und lassen sich nicht immer befriedigend lagerstabil in pulverförmige Wasch- oder Reinigungsmittel einarbeiten.

Ein mögliches Verfahren zur Herstellung von teilchenförmigen Reinigungs- und insbesondere Waschmitteln mit in neuerer Zeit erwünscht hohem Schüttgewicht von über 600 g/l, vorzugsweise von über 700 g/l beinhaltet die Extrusion eines mehr oder weniger plastischen Gemischs der Inhaltsstoffe. Derartige Verfahren werden beispielsweise in den internationalen Patentanmeldungen WO 91/02047 und WO 93/02176 beschrieben. Aufgrund der äußerst unterschiedlichen Korneigenschaften bezüglich Gewicht und Größenverteilung sind in derartige verdichtete Schwerpulver übliche Schaumregulatorgranulate nicht ohne weiteres lagerstabil einzuarbeiten. Vielmehr tritt in der Regel schon nach kurzer Lagerungsdauer eine Separation der schwereren, größeren Waschmittelextrudate von den kleineren, leichteren, normalerweise durch einen Sprühtrocknungsschritt hergestellten Schaumregulatorteilchen ein, so daß unter Anwendungsbedingungen des Mittels eine gleichmäßige Schaumunterdrückung nicht möglich ist.

Zur Behebung dieses Problems wurde versucht, Entschäumerwirkstoffe, zu denen insbesondere Silikone und Paraffine zu rechnen sind, in das zu extrudierende Gemisch der sonstigen Inhaltsstoffe homogen einzuarbeiten und zusammen mit diesen zu extrudieren. Dabei zeigte sich jedoch, daß ein erheblicher Wirksamkeitsverlust der schaumregulierenden Komponente erfolgte.

Überraschenderweise wurde nun gefunden, daß durch ein Extrusionsverfahren aus Entschäumerwirkstoffen in Mischung mit anorganischen und/oder organischen Trägermaterialien Schaumregulatorgranulate mit hohem Schüttgewicht erhalten werden können, welche ohne die Gefahr der Pulverseparation lagerstabil in verdichtete Schwerpulver eingearbeitet werden können und in denen die schaumregulierende Wirksamkeit über eine lange Zeit erhalten bleibt.

Gegenstand der Erfindung ist somit ein granularer, zur Verwendung in tensidhaltigen Wasch- und Reinigungsmitteln mit hohem Schüttgewicht geeigneter Schaumregulator, der anorganisches und/oder organisches Trägermaterial und einen Entschäumerwirkstoff enthält, ein Schüttgewicht im Bereich von 700 g/l bis 1100 g/l, insbesondere von 700 g/l bis 1000 g/l aufweist und eine mittlere Korngröße im Bereich von 0,7 mm bis 3 mm besitzt, wobei weniger als 25 Gew.-% der Teilchen einen Durchmesser über 1,6 mm aufweisen, und der dadurch gekennzeichnet ist, daß weniger als 6 Gew.-% der Schaumregulatorteilchen einen Durchmesser unter 0.4 mm aufweisen.

Vorzugsweise besitzt er eine mittlere Korngröße im Bereich von 0,8 mm bis 1.6 mm. wobei weniger als 22 Gew.-% der Teilchen einen Durchmesser über 1,6 mm. 70 Gew.-% bis 90 Gew.-% der Teilchen einen Durchmesser von 0.8 mm bis 1,6 mm und weniger als 10 Gew.-%, insbesondere weniger als 5 Gew.-% der Teilchen einen Durchmesser unter 0.8 mm aufweisen.

Ein weiterer Gegenstand der Erfindung ist ein Verfahren zur Herstellung granularer Schaumregulatoren mit einem Schüttgewicht im Bereich von 700 g/l bis 1100g/l, dadurch gekennzeichnet, daß man ein homogenes Vorgemisch aus Trägermaterial und Entschäumerwirkstoff über Lochformen mit Öffnungsweiten im Bereich von 0,5 mm bis 5 mm bei Drucken von 25 bar bis 200 bar, gegebenenfalls in Gegenwart eines Plastifizierhilfsmittels, strangförmig verpresst. den Strangs nach Austritt aus der Lochform mittels einer Schneidevorrichtung auf eine Länge schneidet, die weniger als 20 % vom Durchmesser der Lochform abweicht, und gegebenenfalls das Extrudat in einem Rondiergerät behandelt, gewünschtenfalls unter Mitverwendung von Abpuderungsmitteln.

Zu den einsetzbaren Entschäumerwirkstoffen gehören Organopolysiloxane, Paraffinwachse, Wachsester, langkettige Alkohole, langkettige Ketone, langkettige Fettsäuren und Gemische aus diesen, insbesondere auch in Abmischung mit feinteiligem Bisfettsäureamid und/oder Kieselsäure.

Als im Rahmen der Erfindung verwendbare flüssige Organopolysiloxane kommen übliche Alkyl- und Arylpolysiloxane, ihre Co- und Blockpolymere mit Polyalkylenoxiden und ihre Acylierungsprodukte mit langkettigen Fettsäuren in Betracht. Sie können als solche oder in Gemischen mit weiteren üblichen Entschäumerwirkstoffen vorliegen, zu denen insbesondere Paraffine, langkettige Fettsäureester und feinteilige Kieselsäure, die auch silaniert oder auf andere Weise hydrophobiert sein kann, gehören. Vorzugsweise werden kieselsäurehaltige Organopolysiloxane, insbesondere Dimethylpolysiloxan, eingesetzt. Der Gehalt an feinteiliger Kieselsäure, falls vorhanden, liegt vorzugsweise bei 1 Gew.-% bis 10 Gew.-%, bezogen auf Organopolysiloxan. Die Viskosität der kieselsäurehaltigen Organopolysiloxane beträgt bei Raumtemperatur vorzugsweise 25 000 mPa.s bis 38 000 mPa.s, sie kann nach üblichen Methoden, beispielsweise mit einem Brookfield(R)-Viskosimeter Modell RVT unter Verwendung von Spindel Nr. 5 bei 10 Umdrehungen pro Minute, gemessen werden.

Das im Entschäumerwirkstoff gegebenenfalls enthaltene Paraffinwachs stellt im allgemeinen ein komplexes Stoffgemisch ohne scharfen Schmelzpunkt dar. Zur Charakterisierung bestimmt man üblicherweise seinen Schmelzbereich durch Differential-Thermo-Analyse (DTA), wie in "The Analyst" 87 (1962), 420, beschrieben, und/oder seinen Erstarrungspunkt. Darunter versteht man die Temperatur, bei der das Wachs durch langsames Abkühlen aus dem flüssigen in den festen Zustand übergeht. Eingesetzt werden können beispielsweise die aus EP-A-309 931 bekannten Paraffinwachsgemische aus 26 Gew.-% bis 49 Gew.-% mikrokristallinem Paraffinwachs mit einem Erstarrungspunkt von 62 °C bis 90 °C, 20 Gew.-% bis 49 Gew.-% Hartparaffin mit einem Erstarrungspunkt von 42 °C bis 56 °C und 2 Gew.-% bis 25 Gew.-% Weichparaffin mit einem Erstarrungspunkt von 35 °C bis 40 °C. Vorzugsweise werden Paraffine bzw. Paraffingemische verwendet, die im Bereich von 30 °C bis 90 °C erstarren. Dabei ist zu beachten, daß auch bei Raumtemperatur fest erscheinende Paraffinwachsgemische unterschiedliche Anteile an flüssigem Paraffin enthalten können. Dabei sind bei Raumtemperatur vollständig flüssige Paraffine, das heißt solche mit einem Erstarrungspunkt unter 25 °C, nicht brauchbar. So weisen bevorzugte Paraffinwachsgemische bei 30 °C einen Flüssiganteil von unter 10 Gew.-%, insbesondere von 2 Gew.-% bis 5 Gew.-%, bei 40 °C einen Flüssiganteil von unter 30 Gew.-%, vorzugsweise von 5 Gew.-% bis 25 Gew.-% und insbesondere von 5 Gew.-% bis 15 Gew.-%, bei 60 °C einen Flüssiganteil von 30 Gew.-% bis 60 Gew.-%, insbesondere von 40 Gew.-% bis 55 Gew.-%, bei 80 °C einen Flüssiganteil von 80 Gew.-% bis 100 Gew.-%, und bei 90 °C einen Flüssiganteil von 100 Gew.-% auf. Die Temperatur, bei der ein Flüssiganteil von 100 Gew.-% des Paraffinwachses erreicht wird, liegt bei besonders bevorzugten Paraffinwachsgemischen noch unter 85 °C, insbesondere bei 75 °C bis 82 °C.

Als mögliche Komponente des Entschäumerwirkstoffs kommen Wachsester natürlichen oder synthetischen Ursprungs in Frage. Der Carbonsäureteil des Carbonsäureesters enthält 12 bis 28 Kohlenstoffatome. Bevorzugt sind die Ester gesättigter oder ungesättigter C₁₂₋₂₂-, insbesondere C₁₄₋₁₈-Fettsäuren. Insbesondere handelt es sich um Ester von Behensäure, Stearinsäure, Ölsäure, Palmitinsäure, Myristinsäure und/oder Laurinsäure. Der Alkoholteil des Carbonsäureesters ist ein ein- oder mehrwertiger Alkohol mit 1 bis 40, insbesondere 1 bis 32 Kohlenstoffatomen. Beispiele von geeigneten Alkoholen sind Behenylalkohol, Arachidylalkohol, Kokosalkohol, Oleylalkohol, Laurylalkohol, Ethylenglykol, Glycerin, Methanol, Ethanol, Isopropanol, Vinylalkohol, Saccharose, Erythrit, Pentaerythrit, Sorbitan und/ oder Sorbit. Bevorzugte Ester sind solche von linearen primären Alkoholen. Außer den Carbonsäureestern von langkettigen C₁₈₋₂₈-Alkoholen, insbesondere Bienenwachs, werden vorzugsweise Ester von kurzkettigen C₁₋₈-Alkoholen verwendet. In einer bevorzugten Ausführungsform werden Gemische aus Estern von langkettigen Alkoholen mit solchen von kurzkettigen Alkoholen im Gewichtsverhältnis von 10:1 bis 1:10 eingesetzt. Ein Beispiel für einen erfindungsgemäß geeigneten natürlichen Wachsester ist Bienenwachs, das hauptsächlich aus den Estern CH₃(CH₂)₂₄COO(CH₂)₂₇CH₃ und CH₃(CH₂)₂₆COO(CH₂)₂₅CH₃ besteht. In Frage kommende Ester mehrwertiger Alkohole sind beispielsweise Xylitmonopalmitat, Pentaerythritmonostearat, Glycerinmonostearat, Ethylenglykolmonostearat und Sorbitanmonostearat, Sorbitanpalmitat, Sorbitanmonolaurat, Sorbitandilaurat, Sorbitandistearat, Sorbitandibehenat, Sorbitandioleat sowie gemischte Talgalkylsorbitanmono- und -diester. Brauchbare Glycerinester sind die Mono-, Di- oder Triester von Glycerin und genannten Carbonsäuren, wobei die Mono- oder Dieester bevorzugt sind. Glycerinmonostearat, Glycerinmonooleat, Glycerinmonopalmitat, Glycerinmonobehenat und Glycerindistearat sind Beispiele hierfür.

Die obengenannten langkettigen Alkohole, insbesondere solche im C-Kettenbereich von 12 bis 24, können auch in freier Form im Entschäumerwirkstoff enthalten sein.

Die im Entschäumerwirkstoff gegebenenfalls enthaltene Carbonsäure-Komponente enthält vorzugsweise 12 bis 28 Kohlenstoffatome. Geeignet sind insbesondere Behensäure, Stearinsäure, Ölsäure, Palmitinsäure, Myristinsäure und Laurinsäure sowie deren Gemische, wie sie aus natürlichen Fetten bzw. gegebenenfalls gehärteten Ölen, wie Talg oder hydriertem Palmöl, erhältlich sind. Bevorzugt sind gesättigte Fettsäuren mit 12 bis 22, insbesondere 14 bis 18 C-Atomen.

Eine mögliche zusätzliche Komponente des Entschäumerwirkstoffs ist ein Bisamid, das sich von gesättigten Fettsäuren mit 12 bis 22, vorzugsweise 14 bis 18 C-Atomen sowie von Alkylendiaminen mit 2 bis 7 C-Atomen ableitet. Geeignete Fettsäuren sind Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin, 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoyl-ethylendiamin, Bis-palmitoyl-ethylendiamin, Bis-stearoylethylendiamin und deren Gemische sowie die entsprechenden Derivate des Hexamethylendiamins. Die Bisamide liegen vorzugsweise, wie in der europäischen Patentanmeldung EP 309 931 beschrieben, in feinverteilter Form vor und weisen insbesondere eine mittlere Korngröße von weniger als 50 µm auf. Vorzugsweise liegt die maximale Korngröße der Bisamid-Partikel unter 20 µm, wobei mindestens 50 %, insbesondere mindestens 75 % der Partikel kleiner als 10 µm sind. Diese Angaben hinsichtlich der Partikelgröße beziehen sich auf die bekannte Bestimmungsmethode mit dem "Coulter Counter".

Außerdem kann der Entschäumerwirkstoff, zusätzlich zu oder anstelle von Bisamid, feinteilige, insbesondere hydrophobierte Kieselsäure enthalten. Unter hydrophobierter Kieselsäure wird in aller Regel durch Behandeln von feinteiliger, durch Fällung aus Silikatlösungen oder pyrogene Zersetzung von Siliziumhalogeniden hergestellter Kieselsäuren mit Organohalogensilanen erhaltene Kieselsäure verstanden, wie sie beispielsweise in den US-amerikanischen Patentschriften US 3 207 698 oder US 3 388 073 beschrieben wird. Auch durch das Fixieren von Organopolysiloxanen, beispielsweise Polydimethylsiloxan, an feinteiliges Siliziumdioxid, wie beispielsweise aus der US-amerikanischen Patentschrift US 3 235 509 bekannt, können hydrophobierte Kieselsäuren erhalten werden. Als weiteres Beispiel sei mit Dimethyldichlorsilan oder Trimethylchlorsilan umgesetztes pyrogenes Siliciumdioxid genannt. Die hydrophobierten Kieselsäure-Partikel weisen normalerweise durchschnittliche Primärteilchengrößen von 5 µm bis 50 µm bei spezifischen Oberflächen von 100 m²/g bis 300 m²/g auf. Die zur Hydrophobierung der Kieselsäure notwendigen Mengen an Silan bzw. Siloxan sind äußerst klein, sie betragen normalerweise nicht mehr als etwa 5 Gew.-% der Kieselsäuremenge.

Zusätzlich zum oder anstelle des genannten Bisamids bzw. der genannten Kieselsäure kann der Entschäumerwirkstoff langkettige Ketone enthalten, die durch Umsetzung von linearen oder verzweigten, gesättigten oder ungesättigten Carbonsäuren oder Carbonsäuregemischen erhältlich sind, in denen die Carbonsäuren mehr als 12 C-Atome, insbesondere eine Kohlenstoffkettenlänge von C₁₄ bis C₃₀ aufweisen und bei der Ketonisierung unter Abspaltung von Kohlendioxid und Wasser reagieren. Besonders bevorzugt sind Ketone, welche aus der Ketonisierung von Carbonsäuren bzw. Carbonsäuresalzen der Kohlenstoffkettenlänge von C₁₈ bis C₂₂ sowie deren Gemischen erhalten werden. Die Herstellung der Ketone kann üblicherweise bei Temperaturen im Bereich von etwa 200 bis 350 °C in Gegenwart von Metalloxiden oder fettsauren Metallverbindungen erfolgen. Es können sowohl Ausgangsmaterialien mit einheitlicher Anzahl an C-Atomen als auch Fettsäuregemische natürlichen Ursprungs eingesetzt werden. Diese Gemische können auch Carbonsäuren mit 12 und weniger C-Atomen enthalten, sofern ein Überschuß an Fettsäuren mit 14 und mehr C-Atomen vorliegt. Es entstehen dabei Gemische aus symmetrischen und unsymmetrischen Ketonen, wobei die unsymmetrischen Ketone entsprechend dem eingesetzten Material auch kürzere Ketten als C₁₄ bzw. C₁₂ aufweisen können, sofern ein längerkettiger Rest im Molekül vorhanden ist, so daß die Gesamtzahl der C-Atome im Durchschnitt mindestens 25 beträgt. Beispiele sind Heptacosanon-14, Hentriacontanon-16, Pentatriacontanon-18, Nonatriacontanon-20, Triatetracontanon-22 bzw. Nonacosanon-15, Tritriacontanon-17, Heptatriacontanon-19, Hentetracontanon-21 und dergleichen. Ketone bzw. Ketongemische der beschriebenen Art sind üblicherweise bei Raumtemperatur fest und weisen Schmelzpunkte im Bereich von 60 °C bis 105 °C auf.

Das phosphatfreie, das heißt keine anorganischen Phosphate oder Polyphosphate enthaltende Trägermaterial im erfindungsgemäßen Schaumregulator weist eine körnige Struktur auf und besteht aus wasserlöslichen oder wasserdispergierbaren Verbindungen, in erster Linie aus anorganischen und/oder organischen Salzen, die für den Einsatz in Wasch- und Reinigungsmitteln geeignet sind. In Frage kommen insbesondere übliche Waschalkalien, beispielsweise Alkalicarbonate, Buildersubstanzen, beispielsweise Alumosilikate und/oder Polycarboxylate, und/oder Schichtsilikate, beispielsweise Bentonite. In einer bevorzugten Ausführungsform des erfindungsgemäßen Mittels enthält das Trägermaterial sowohl Alkalicarbonat als auch Alkalisilikat. In diesem Fall enthält das Trägermaterial vorzugsweise 1 Gew.-% bis 50 Gew.-% Alkalicarbonat, bis zu 70 Gew.-% Alkalisulfat, bis zu 50 Gew.-% Alkalialumosilikat und 10 Gew.-% bis 50 Gew.-% Alkalisilikat, kann jedoch zusätzlich weitere wasserlösliche oder wasserunlösliche, wasserdispergierbare Stoffe enthalten. Zu den zusätzlich verwendbaren Materialien gehören insbesondere Alkalichloride und Schichtsilikate, beispielsweise Bentonit. Bei dem Alkalisilikat handelt es sich vorzugsweise um eine Verbindung mit einem Molverhältnis Alkalioxid zu SiO₂ von 1:1,5 bis 1:3,5. Die Verwendung derartiger Silikate resultiert in besonders guten Korneigenschaften, insbesondere hoher Abriebsstabilität und dennoch hoher Auflösungsgeschwindigkeit in Wasser. Zu den im Trägermaterial für die erfindungsgemäßen Schaumregulatoren brauchbaren Alumosilikaten gehören insbesondere die Zeolithe, beispielsweise Zeolith NaA und NaX. Als organische Trägermaterialien beziehungsweise Komponenten des Trägermaterials kommen zum Beispiel Stärke sowie die Acetate, Tartrate, Citrate, Succinate, Carboxymethylsuccinate sowie die Alkalisalze von Aminopolycarbonsäuren, wie NTA oder EDTA, Hydroxyalkanphosphonate und Aminoalkanpolyphosphonate in Frage, wie 1-Hydroxyethan-1,1-diphosphonat, Ethylendiaminotetramethylenphosphonat und Diethylentriaminpentamethylenphosphonat in Frage. Brauchbar sind ferner wasserlösliche Salze von polymeren beziehungsweise copolymeren Carbonsäuren, beispielsweise Polyacrylate und Mischpolymerisate aus Acrylsäure und Maleinsäure. Gemische aus anorganischen und organischen Salzen können vielfach mit Vorteil verwendet werden. Bevorzugtes Alkalimetall in den genannten Alkalisalzen ist dabei in allen Fällen Natrium.

Das Trägermaterial kann darüberhinaus, insbesondere im Hinblick auf seinen Einsatz in Extrusionsverfahren, Plastifizierhilfsmittel, zum Beispiel in Form filmbildender Polymere, zu denen beispielsweise Polyethylenglykole, Polyvinylalkohole, Polyvinylpyrrolidone, Polyacrylate, und Cellulosederivate gehören, enthalten. Brauchbare Celluloseether sind insbesondere Alkalicarboxymethylcellulose, Methylcellulose, Ethylcellulose, Hydroxyethylcellulose und sogenannte Cellulosemischether, wie zum Beispiel Methylhydroxyethylcellulose und Methylhydroxypropylcellulose, sowie deren Mischungen. Vorzugsweise werden Mischungen aus Natrium-Carboxymethylcellulose und Methylcellulose eingesetzt, wobei die Carboxymethylcellulose üblicherweise einen Substitutionsgrad von 0,5 bis 0,8 Carboxymethylgruppen pro Anhydroglukoseeinheit und die Methylcellulose einen Substitutionsgrad von 1,2 bis 2 Methylgruppen pro Anhydroglukoseeinheit aufweist. Die Gemische enthalten vorzugsweise Alkalicarboxymethylcellulose und nichtionischen Celluloseether in Gewichtsverhältnissen von 80:20 bis 40:60, insbesondere von 75:25 bis 50:50. Derartige Celluloseethergemische können in fester Form oder als wäßrige Lösungen verwendet werden, die in üblicher Weise vorgequollen sein können. Auch geringe Mengen, das heißt nicht mehr als 10 Gew.-%, insbesondere 0,5 Gew.-% bis 5 Gew.-%, nichtionisches Tensid können als Plastifizierhilfsmittel eingesetzt werden. Darunter sind oberflächenaktive Verbindungen mit hydrophobem Molekülteil und hydrophilen nichtionischen Gruppen zu verstehen, die in wäßriger Lösung oder Dispersion eine reinigende beziehungsweise emulgierende Wirkung entfalten. Der hydrophobe Molekülteil besteht im allgemeinen aus einem Kohlenwasserstoffrest beziehungsweise einem substituierten Kohlenwasserstoffrest oder einem in Wasser schwer löslichen Polyglykoletherrest, zum Beispiel einem Polypropylenglykol- beziehungsweise Polybutylenglykol-Etherrest. Die hydrophile nichtionische Gruppe des Moleküls wird in der Regel aus einem Polyethylenglykol-Etherrest gebildet, in dem normalerweise 2 bis 80 Ethylenglykoleinheiten enthalten sind. Zu den brauchbaren Plastifizierhilfsmitteln gehören auch mehrwertige Alkohole wie Glycerin und Propylenglykol und Zucker wie Maltose, Glukose und Saccharose sowie deren Gemische.

Eine bevorzugte Ausführungsform des erfindungsgemäßen Schaumregulators enthält einen Entschäumerwirkstoff, der ein Gemisch aus, bezogen auf gesamten Entschäumerwirkstoff, 0,1 Gew.-% bis 30 Gew.-% mindestens eines von einem C₂₋₇-Diamin und einer gesättigten C₁₂₋₂₂-Carbonsäure abgeleiteten Bisamids, 20 Gew.-% bis 99,9 Gew.-% mindestens eines Esters aus einer C₁₂₋₂₂-Carbonsäure und einem C₁₋₄₀-Alkohol, bis zu 79,9 Gew.-%, insbesondere 1 Gew.-% bis 75 Gew.-% eines Paraffinwachses beziehungsweise Paraffinwachsgemisches mit einem Erstarrungspunkt nicht unter 25 °C sowie bis zu 79,9 Gew.-%, insbesondere 10 Gew.-% bis 60 Gew.-% mindestens einer C₁₂₋₂₈-Carbonsäure ist.

In einer weiteren bevorzugten Ausführungsform enthält der erfindungsgemäße Schaumregulator einen Entschäumerwirkstoff, der ein Gemisch aus 0,1 Gew.-% bis 30 Gew.-% hydrophobierter Kieselsäure und/oder mindestens eines von einem C₂₋₇-Diamin und einer gesättigten C₁₂₋₂₂-Carbonsäure abgeleiteten Bisamids, 20 Gew.-% bis 99,9 Gew.-% mindestens eines Alkohols mit 12 bis 24 C-Atomen, bis zu 79,9 Gew.-% mindestens eines Esters aus einer C₁₂₋₂₂-Carbonsäure und einem C₁₋₄₀-Alkohol, bis zu 79,9 Gew.-% mindestens einer C₁₂₋₂₈-Carbonsäure sowie bis zu 79,9 Gew.-% eines Paraffinwachses beziehungsweise Paraffinwachsgemisches mit einem Erstarrungspunkt nicht unter 25 °C ist.

Eine weitere bevorzugte Ausführungsform des erfindungsgemäßen Schaumregulators beinhaltet einen Entschäumerwirkstoff, der ein Gemisch aus 0,1 Gew.-% bis 30 Gew.-% eines langkettige Alkyl- oder Alkenylreste aufweisenden Ketons mit insgesamt mindestens 25 C-Atomen und 70 Gew.-% bis 99,9 Gew.-% eines bei Raumtemperatur festen Paraffinwachses beziehungsweise Paraffinwachsgemisches, das bei einer Temperatur unterhalb von 90 °C zu 100 Gew.-% in flüssiger Form vorliegt, ist.

Schließlich betrifft eine weitere Ausführungsform erfindungsgemäßer Schaumregulatoren solche, die als Entschäumerwirkstoff Gemische aus obengenannten Paraffinen, gegebenenfalls in Abmischung mit obengenannten Bisamiden, und obengenannten Silikonen, gegebenenfalls in Abmischung mit obengenannter hydrophobierter Kieselsäure, in Gewichtsverhältnissen von 10:1 bis 1:10, insbesondere 7:3 bis 1:7,5, enthalten.

Die Herstellung eines erfindungsgemäßen Schaumregulators erfolgt vorzugsweise durch strangförmiges Verpressen eines homogenen Vorgemischs aus insbesondere Alkalicarbonat-haltigem Trägermaterial und Entschäumerwirkstoff über Lochformen mit Öffnungsweiten im Bereich von 0,5 mm bis 5 mm bei Drucken von 25 bar bis 200 bar und Schneiden des Strangs nach Austritt aus der Lochform mittels einer Schneidevorrichtung auf eine Länge, die weniger als 20 % vom Durchmesser der Lochform abweicht. Durch dieses Verfahren werden Granulate mit einer äußerst einheitlichen Teilchenform erhalten. Bevorzugt ist dabei die Kugelform.

Vorzugsweise enthält das für die Extrusion vorgesehene homogene Vorgemisch ein oben beschriebenes Plastifizierhilfsmittel, insbesondere Glycerin, Polyethylenglykol mit einem mittleren Molgewicht von 200 bis 1000, Glukose, Saccharose und/oder filmbildendes Polycarboxylat. Der Anteil derartigen Plastifizierungshilsfsmittels im zu extrudierenden Vorgemisch und im durch das erfindungsgemäße Verfahren hergestellten Schaumregulator beträgt vorzugsweise 1 Gew.-% bis 35 Gew.-%, insbesondere 1 Gew.-% bis 25 Gew.-%.

Das den Extruder verlassende Extrudat kann nach dem Schneiden in im Prinzip bekannter Weise in einem üblichen Rondiergerät, beispielsweise einem Marumerizer^{(R)}, gewünschtenfalls unter Mitverwendung von Abpuderungsmitteln, verrundet werden. Brauchbare Abpuderungsmittel, durch deren Verwendung eine eventuelle Klebrigkeit des Extrudats beseitigt werden kann, sind beispielsweise feinteiliger Zeolith in Waschmittelqualität und Kieselsäuren sowie deren Gemische.

Die erfindungsgemäßen beziehungsweise die nach dem erfindungsgemäßen Verfahren hergestellten granularen Schaumregulatoren werden insbesondere zur Herstellung von Wasch- und Reinigungsmitteln mit hohem Schüttgewicht verwendet, in einfacher Weise durch Vermischen mit mindestens einem weiteren Granulat, welches ein Schüttgewicht von 600 g/l bis 1100 g/l, insbesondere von 600 g/l bis 1000 g/l, aufweist und übliche Bestandteile von Wasch- oder Reinigungsmitteln, insbesondere Tensid, Builder, Bleichmittel und/oder Bleichaktivator, enthält.

### Beispiele

### Beispiel 1 : Herstellung von Schaumregulatoren

Durch Vermischen der in der nachfolgenden Tabelle angegebenen Inhaltsstoffe in den angegebenen Mengenverhältnissen (mit Ausnahme von 2 Gew.-% Zeolith) mittels eines Pflugscharmischers mit Zerhacker wurden homogene Vorgemische erzeugt, die mittels eines 2-Wellen-Extruders bei einem Druck von 100 bar extrudiert und direkt hinter der Lochplatte (Lochdurchmesser 1,4 mm) auf eine Länge von 1,4 mm geschnitten wurden. Anschließend wurden die Extrudate in einem Spheronizer unter Zugabe des restlichen Zeoliths als Abpuderungsmittel verrundet. Die erhaltenen Granulate **S1**, **S2**, **S3** und **S4** wiesen eine mittlere Korngröße von 1,2 mm auf und enthielten 8 Gew.-% an Teilchen mit Durchmessern über 1,6 mm und 5 Gew.-% an Teilchen mit Durchmessern unter 0,4 mm. Granulat **S1** wies ein Schüttgewicht von 828 g/l, **S2** von 848 g/l, **S3** von 1060 g/l und **S4** von 936 g/l auf.

**Tabelle 1:**

| Zusammensetzung [Gew.-%] | | | | |
|---|---|---|---|---|
| | **S1** | **S2** | **S3** | **S4** |
| Silikon^{a)} | 16 | 20 | 15 | 20 |
| Paraffin^{b)} | - | 5 | 2 | 5 |
| Natriumcarbonat | 36 | 10 | 52 | 10 |
| Na-hydrogencarbonat | - | 10 | - | 10 |
| Natriumsulfat | - | - | 18 | - |
| Stärke | - | - | - | 54 |
| Na-Polycarboxylat^{c)} | 17 | 20 | 2,4 | - |
| Glycerin | - | - | 3 | - |
| Glukose | 16 | 20 | - | - |
| Zeolith Na-A | 7 | 7 | 2 | - |
| Polyethylenglykol^{d)} | 6,5 | 7 | 4 | - |
| Wasser | 1,5 | 1 | 1,6 | 1 |

| | | | | |
|---|---|---|---|---|
| a) Polydimethylsiloxan, Viskosität 30000 mPa.s | | | | |
| b) Wachsgemisch mit 12 Gew.-% Bisstearoylethylendiamin gemäß DE-A-42 07 352 | | | | |
| c) Sokalan^{(R)} CP 5, Hersteller BASF | | | | |
| d) Molgewicht 400 | | | | |

### Beispiel 2

Auf die gleiche Weise wie in Beispiel 1 beschrieben wurde ein Waschmittel mit hohem Schüttgewicht **W1** hergestellt, enthaltend 18 Gew.-% Natriumalkylbenzolsulfonat, 3 Gew.-% Niotensid (Dehydol^{(R)}), 16 Gew.-% Natriumperborat, 29 Gew.-% Zeolith Na-A, 5 Gew.-% Natriumcarbonat, 5 Gew.-% polymeres Polycarboxyalat (Sokalan CP 5, Hersteller BASF), 6 Gew.-% Tetraacetylethylendiamin, 3 Gew.-% Plastifizierhilfsmittel (40-fach ethoxylierter Fettalkohol) und als Rest auf 100 Gew.-% Wasser, und ein Waschmittel **W2**, das wie **W1** zusammengesetzt war, aber unter Verringerung des Wasseranteils 0,6 Gew.-% des in Beispiel 1 eingesetzten Silikon-Entschäumerwirkstoffes enthielt.

Waschmittel **W1** wurde der erfindungsgemäße granulare Schaumregulator **S1** aus Beispiel 1 in einer Menge zugesetzt, die zu einer Konzentration von 0,52 Gew.-% des Entschäumerwirkstoffs führte. Das so erhaltene Waschmittel (**W1** + **S1**) konnte ohne Entmischung der granularen Teilkomponenten über eine Zeitraum von 16 Wochen gelagert werden. Zur Bestimmung des Schaumverhaltens wurde es unter Anwendungsbedingungen (Haushaltswaschmaschine Miele W717, 3,5 kg saubere Wäsche, Wasserhärte 3 °d, Waschmitteldosierung 80 g) getestet und erhielt die in der nachfolgenden Tabelle 2 angegebenen Schaumnoten (Skala von 0 bis 6; 0 = kein Schaum; 5 = Schauglas der Waschmaschine vollständig mit Schaum gefüllt; 6 = Flottenverlust durch Überschäumen; abgelesen wurde nach 30 Minuten Waschdauer). Zum Vergleich wurde das eine geringfügig höhere Entschäumerwirkstoffmenge enthaltende Waschmittel **W2** und ein aus diesem durch Zufügen einer Menge von 0,4 Gew.-% (bezogen auf Entschäumerwirkstoff) eines Schauminhibitorkonzentrates des Standes der Technik (enthaltend 15 Gew.-% Silikon, Rest Natriumsulfat, Natriumcarbonat, Natriumsilikat, gequollene Carboxymethylcellulose; sprühgetrocknet gemäß WO-A-91/12306) erzeugte Waschmittel **W3** unter den gleichen Bedingungen getestet. Man erkennt, daß das den erfindungsgemäßen Schaumregulator enthaltende Waschmittel in allen Fällen dem Mittel mit vor der Extrusion eingearbeitetem Entschäumerwirkstoff überlegen ist und sein Schaumverhalten vor allem bei niedrigen Temperaturen sogar dasjenige des fast die doppelte Menge an Entschäumerwirkstoff enthaltenden Mittels **W3** übertrifft. Gleiches gilt, wenn die Schaumregulatoren **S2** oder **S4** aus Beispiel 1 mit dem Waschmittel **W1** eingesetzt werden.

**Tabelle 2:**

| Schaumnoten | | | | |
|---|---|---|---|---|
| Waschtemperatur | **W1 + S1** | **W1 + S3** | **W2** | **W3** |
| 20 °C | 1 | 1 | 6 | 6 |
| 40 °C | 1 | 1 | 6 | 6 |
| 90 °C | 1 | 1 | 3 | 3 |

## Patentansprüche

1. Granularer, zur Verwendung in tensidhaltigen Wasch- und Reinigungsmitteln mit hohem Schüttgewicht geeigneter Schaumregulator, der anorganisches und/oder organisches Trägermaterial und einen Entschäumerwirkstoff enthält, ein Schüttgewicht im Bereich von 700 g/l bis 1100 g/l aufweist und eine mittlere Korngröße im Bereich von 0,7 mm bis 3 mm besitzt, wobei weniger als 25 Gew.-% der Teilchen einen Durchmesser über 1,6 mm aufweisen, dadurch gekennzeichnet, daß weniger als 6 Gew.-% der Schaumregulatorteilchen einen Durchmesser unter 0,4 mm aufweisen.

2. Schaumregulator nach Anspruch 1, dadurch gekennzeichnet, daß er eine mittlere Korngröße im Bereich von 0,8 mm bis 1,6 mm besitzt und weniger als 22 Gew.-% der Teilchen einen Durchmesser über 1,6 mm, 70 Gew.-% bis 90 Gew.-% der Teilchen einen Durchmesser von 0,8 mm bis 1,6 mm und weniger als 10 Gew.-%, insbesondere weniger als 5 Gew.-% der Teilchen einen Durchmesser unter 0,8 mm aufweisen.

3. Schaumregulator nach Anspruch 1 oder 2, dadurch gekennzeichnet, daß er 5 Gew.-% bis 80 Gew.-% Entschäumerwirkstoff und 20 Gew.-% bis 95 Gew.-% körniges, phosphatfreies und wasserlösliches und/oder wasserunlösliches, wasserdispergierbares Trägermaterials enthält.

4. Schaumregulator nach einem der Ansprüche 1 bis 3, dadurch gekennzeichnet, daß er 8 Gew.-% bis 50 Gew.-%, insbesondere 10 Gew.-% bis 40 Gew.-% Entschäumerwirkstoff und 50 Gew.-% bis 92 Gew.-%, insbesondere 60 Gew.-% bis 90 Gew.-% Trägermaterial enthält.

5. Schaumregulator nach einem der Ansprüche 1 bis 4, dadurch gekennzeichnet, daß der Entschäumerwirkstoff ein Organopolysiloxan, ein Paraffinwachs, ein Wachsester, eine langkettige Fettsäure oder ein Gemisch aus diesen, insbesondere in Abmischung mit feinteiligem Bisfettsäureamid, langkettigem Keton und/oder Kieselsäure, enthält.

6. Schaumregulator nach einem der Ansprüche 1 bis 5, dadurch gekennzeichnet, daß der Entschäumerwirkstoff ein Gemisch aus
0,1 Gew.-% bis 30 Gew.-% mindestens eines von einem C₂₋₇-Diamin und einer gesättigten C₁₂₋₂₂-Carbonsäure abgeleiteten Bisamids,
20 Gew.-% bis 99,9 Gew.-% mindestens eines Esters aus einer C₁₂₋₂₂-Carbonsäure und einem C₁₋₄₀-Alkohol,
bis zu 79,9 Gew.-%, insbesondere 1 Gew.-% bis 75 Gew.-% eines Paraffinwachses beziehungsweise Paraffinwachsgemisches mit einem Erstarrungspunkt nicht unter 25 °C sowie
bis zu 79,9 Gew.-%, insbesondere 10 Gew.-% bis 60 Gew.-% mindestens einer C₁₂₋₂₈-Carbonsäure
ist.

7. Schaumregulator nach einem der Ansprüche 1 bis 5, dadurch gekennzeichnet, daß der Entschäumerwirkstoff ein Gemisch aus
0,1 Gew.-% bis 30 Gew.-% hydrophobierter Kieselsäure und/oder mindestens eines von einem C₂₋₇-Diamin und einer gesättigten C₁₂₋₂₂-Carbonsäure abgeleiteten Bisamids,
20 Gew.-% bis 99,9 Gew.-% mindestens eines Alkohols mit 12 bis 24 C-Atomen,
bis zu 79,9 Gew.-% mindestens eines Esters aus einer C₁₂₋₂₂-Carbonsäure und einem C₁₋₄₀-Alkohol,
bis zu 79,9 Gew.-% mindestens einer C₁₂₋₂₈-Carbonsäure sowie
bis zu 79,9 Gew.-% eines Paraffinwachses beziehungsweise Paraffinwachsgemisches mit einem Erstarrungspunkt nicht unter 25 °C
ist.

8. Schaumregulator nach einem der Ansprüche 1 bis 5, dadurch gekennzeichnet, daß der Entschäumerwirkstoff ein Gemisch aus
0,1 Gew.-% bis 30 Gew.-% eines langkettige Alkyl- oder Alkenylreste aufweisenden Ketons mit insgesamt mindestens 25 C-Atomen und
70 Gew.-% bis 99,9 Gew.-% eines bei Raumtemperatur festen Paraffinwachses beziehungsweise Paraffinwachsgemisches, das bei einer Temperatur unterhalb von 90 °C zu 100 Gew.-% in flüssiger Form vorliegt, ist.

9. Schaumregulator nach einem der Ansprüche 1 bis 5, dadurch gekennzeichnet, daß der Entschäumerwirkstoff ein Gemisch aus Paraffin, gegebenenfalls in Abmischung mit Bisamiden, und Organopolysiloxan, gegebenenfalls in Abmischung mit hydrophobierter Kieselsäure, in Gewichtsverhältnissen von 10:1 bis 1:10, insbesondere 7:3 bis 1:7,5, ist.

10. Schaumregulator nach einem der Ansprüche 5 bis 9, dadurch gekennzeichnet, daß das im Entschäumerwirkstoff enthaltene Paraffinwachs bei 30 °C einen Flüssiganteil unter 10 Gew.-%, bei 40 °C einen Flüssiganteil von unter 30 Gew.-%, bei 60 °C einen Flüssiganteil von 30 Gew.-% bis 60 Gew.-%, bei 80 °C einen Flüssiganteil von 80 Gew.-% bis 100 Gew.-% und bei 90 °C einen Flüssiganteil von 100 Gew.-% aufweist.

11. Schaumregulator nach Anspruch 10, dadurch gekennzeichnet, daß das Paraffinwachs bei 30 °C einen Flüssiganteil von 2 Gew.-% bis 5 Gew.-%, bei 40 °C einen Flüssiganteil von 5 Gew.-% bis 25 Gew.-%, insbesondere von 5 Gew.-% bis 15 Gew.-% und bei 60 °C einen Flüssiganteil von 40 Gew.-% bis 55 Gew.-% aufweist.

12. Schaumregulator nach einem der Ansprüche 1 bis 5, dadurch gekennzeichnet, daß der Entschäumerwirkstoff eine Mischung eines Organopolysiloxans mit feinteiliger Kieselsäure ist und eine Viskosität im Bereich von 25 000 mPa.s bis 38 000 mPa.s bei Raumtemperatur aufweist.

13. Schaumregulator nach einem der Ansprüche 1 bis 12, dadurch gekennzeichnet, daß das Trägermaterial Waschalkalien, insbesondere Alkalicarbonat, Buildersubstanzen, insbesondere Alumosilikat, Schichtsilikat, insbesondere Bentonit, wasserlösliches beziehungsweise in Wasser quellfähiges Polymer, insbesondere Stärke, polymeres Polycarboxylat und/ oder Celluloseether enthält.

14. Verfahren zur Herstellung granularer Schaumregulatoren mit einem Schüttgewicht im Bereich von 700 g/l bis 1100 g/l, dadurch gekennzeichnet, daß man ein homogenes Vorgemisch aus Trägermaterial und Entschäumerwirkstoff über Lochformen mit Öffnungsweiten im Bereich von 0,5 mm bis 5 mm bei Drucken von 25 bar bis 200 bar, gegebenenfalls in Gegenwart eines Plastifizierhilfsmittels, strangförmig verpresst, den Strangs nach Austritt aus der Lochform mittels einer Schneidevorrichtung auf eine Länge schneidet, die weniger als 20 % vom Durchmesser der Lochform abweicht, und gegebenenfalls das Extrudat in einem Rondiergerät behandelt, gewünschtenfalls unter Mitverwendung von Abpuderungsmitteln.

## Claims

1. A granular foam regulator suitable for use in surfactant-containing detergents of high apparent density which contains inorganic and/or organic support material and a foam inhibitor and has an apparent density of 700 g/l to 1100 g/l and an average particle size of 0.7 mm to 3 mm, less than 25% by weight of the particles being larger than 1.6 mm in diameter, characterized in that less than 6% by weight of the foam regulator particles are smaller than 0.4 mm in diameter.

2. A foam regulator as claimed in claim 1, characterized in that it has an average particle size of 0.8 mm to 1.6 mm and less than 22% by weight of the particles are larger than 1.6 mm in diameter, 70% by weight to 90% by weight of the particles are between 0.8 mm and 1.6 mm in diameter and less than 10% by weight and, more particularly, less than 5% by weight of the particles are smaller than 0.8 mm in diameter.

3. A foam regulator as claimed in claim 1 or 2, characterized in that it contains 5% by weight to 80% by weight of foam inhibitor and 20% by weight to 95% by weight of granular, phosphate-free and water-soluble and/or water-insoluble, water-dispersible support material.

4. A foam regulator as claimed in any of claims 1 to 3, characterized in that it contains 8% by weight to 50% by weight and, more particularly, 10% by weight to 40% by weight of foam inhibitor and 50% by weight to 92% by weight and, more particularly, 60% by weight to 90% by weight of support material.

5. A foam regulator as claimed in any of claims 1 to 4, characterized in that the foam inhibitor contains an organopolysiloxane, a paraffin wax, a wax ester, a long-chain fatty acid or a mixture thereof, more particularly in admixture with fine-particle bis-fatty acid amide, long-chain ketone and/or silica.

6. A foam regulator as claimed in any of claims 1 to 5, characterized in that the foam inhibitor is a mixture of 0.1% by weight to 30% by weight of at least one bisamide derived from a C₂₋₇ diamine and a saturated C₂₋₁₂ carboxylic acid, 20% by weight to 99.9% by weight of at least one ester of a C₁₂₋₂₂ carboxylic acid and a C₁₋₄₀ alcohol, up to 79.9% by weight and, more particularly, 1% by weight to 75% by weight of a paraffin wax or paraffin wax mixture with a solidification point of no lower than 25°C and up to 79.9% by weight and, more particularly, from 10% by weight to 60% by weight of at least one C₁₂₋₂₈ carboxylic acid.

7. A foam regulator as claimed in any of claims 1 to 5, characterized in that the foam inhibitor is a mixture of 0.1% by weight to 30% by weight of hydrophobicized silica and/or at least one bisamide derived from a C₂₋₇ diamine and a saturated C₁₂₋₂₂ carboxylic acid, 20% by weight to 99.9% by weight of at least one alcohol containing 12 to 24 carbon atoms, up to 79.9% by weight of at least one ester of a C₁₂₋₂₂ carboxylic acid and a C₁₋₄₀ alcohol, up to 79.9% by weight of at least one C₁₂₋₂₈ carboxylic acid and up to 79.9% by weight of a paraffin wax or paraffin wax mixture with a solidification point of no lower than 25°C.

8. A foam regulator as claimed in any of claims 1 to 5, characterized in that the foam inhibitor is a mixture of 0.1% by weight to 30% by weight of a ketone containing long-chain alkyl or alkenyl groups with a total of at least 25 carbon atoms and 70% by weight to 99.9% by weight of a paraffin wax or paraffin wax mixture solid at room temperature of which 100% by weight is present in liquid form at a temperature below 90°C.

9. A foam regulator as claimed in any of claims 1 to 5, characterized in that the foam inhibitor is a mixture of paraffin, optionally in admixture with bisamides, and oranopolysiloxane, optionally in admixture with hydrophobicized silica, in ratios by weight of 10:1 to 1:10 and, more particularly, in ratios by weight of 7:3 to 1:7.5.

10. A foam regulator as claimed in any of claims 5 to 9, characterized in that the paraffin wax present in the foam inhibitor has a liquid component at 30°C of less than 10% by weight, a liquid component at 40°C of less than 30% by weight, a liquid component at 60°C of 30% by weight to 60% by weight, a liquid component at 80°C of 80% by weight to 100% by weight and a liquid component at 90°C of 100% by weight.

11. A foam regulator as claimed in claim 10, characterized in that the paraffin wax has a liquid component at 30°C of 2% by weight to 5% by weight, a liquid component at 40°C of 5% by weight to 25% by weight and, more particularly, 5% by weight to 15% by weight and a liquid component at 60°C of 40% by weight to 55% by weight.

12. A foam regulator as claimed in any of claims 1 to 5, characterized in that the foam inhibitor is a mixture of an organopolysiloxane with fine-particle silica and has a viscosity at room temperature of 25,000 mPa·s to 38,000 mPa·s.

13. A foam regulator as claimed in any of claims 1 to 12, characterized in that the support material contains washing alkalis, more particularly alkali metal carbonate, builders, more particularly alumosilicate, layer silicate, more particularly bentonite, water-soluble or water-swellable polymer, more particularly starch, polymeric polycarboxylate and/or cellulose ether.

14. A process for the production of granular foam regulators with an apparent density of 700 g/l to 1100 g/l characterized in that a homogeneous compound of support material and foam inhibitor is extruded through multiple-bore extrusion dies with bore diameters of 0.5 mm to 5 mm under pressures of 25 bar to 200 bar, the strand after leaving the extrusion die is cutted by means of a cutting unit to a length which differs by less than 20% from the bore diameter of the extrusion die, and the extrudate is optionally treated in a rounding machine, optionally with application of powders.

## Revendications

1. Régulateur du moussage en granulé convenant pour l'utilisation dans des agents de lavage et de nettoyage à teneur en tensioactifs et à densité en vrac élevée, qui contient une matière porteuse inorganique et/ou organique et une substance active antimousse, présente une densité en vrac située dans l'intervalle de 700 à 1100 g/l et possède une grosseur de grain moyenne comprise dans la plage de 0,7 à 3 mm, moins de 25 % en poids des particules présentant un diamètre supérieur à 1,6 mm, caractérisé en ce que moins de 6 % en poids des particules du régulateur du moussage possèdent un diamètre inférieur à 0,4 mm.

2. Régulateur du moussage selon la revendication 1, caractérisé en ce qu'il possède une grosseur de grain moyenne comprise dans l'intervalle de 0,8 à 1,6 mm et que moins de 22 % en poids des particules présentent un diamètre supérieur à 1,6 mm, 70 à 90 % en poids des particules possèdent un diamètre de 0,8 à 1,6 mm et moins de 10 % en poids, en particulier, moins de 5 % en poids, des particules présentent un diamètre inférieur à 0,8 mm.

3. Régulateur du moussage selon la revendication 1 ou 2, caractérisé en ce qu'il contient 5 à 80 % en poids de substance active antimousse et 20 à 95 % en poids de matière porteuse en granulés, sans phosphates dispersible dans l'eau, soluble et/ou insoluble dans l'eau.

4. Régulateur du moussage selon une des revendications 1 à 3, caractérisé en ce qu'il contient 8 à 50 % en poids, en particulier 10 à 40 % en poids de substance active antimousse et 50 à 92 % en poids, en particulier 60 à 90 % en poids de matière porteuse.

5. Régulateur du moussage selon une des revendications 1 à 4, caractérisé en ce que la substance active antimousse contient un organopolysiloxane, une cire de paraffine, un ester de cire, un acide gras à chaîne longue ou un mélange de ceux-ci, en particulier en mélange avec un bisamide d'acide gras à fines particules, une cétone à chaîne longue et/ou de l'acide silicique.

6. Régulateur du moussage selon une des revendications 1 à 5, caractérisé en ce que la substance active antimousse est un mélange de 0,1 à 30 % en poids d'au moins un bisamide dérivé d'une diamine en C₂₋₇ et d'un acide carboxylique en C₁₂₋₂₂ saturé,
20 à 99,9 % en poids d'au moins un ester d'un acide carboxylique en C₁₂₋₂₂ et d'un alcool en C₁₋₄₀,
jusqu'à 79,9 %, en particulier 1 à 75 % en poids, d'une cire de paraffine ou d'un mélange de cires de paraffine présentant un point de solidification non inférieur à 25 °C, ainsi que
jusqu'à 79,9 % en poids, en particulier 10 à 60 % en poids, d'au moins un acide carboxylique en C₁₂₋₂₈.

7. Régulateur du moussage selon une des revendications 1 à 5, caractérisé en ce que la substance active antimousse est un mélange de 0,1 à 30 % en poids d'acide silicique rendu hydrophobe et/ou d'au moins un bisamide dérivé d'une diamine en C₂₋₇ et d'un acide carboxylique en C₁₂₋₂₂ saturé,
20 à 99,9 % en poids d'au moins un alcool comportant 12 à 24 atomes de C,
jusqu'à 79,9 % en poids d'au moins un ester d'un acide carboxylique en C₁₂₋₂₂ et d'un alcool en C₁₋₄₀,
jusqu'à 79,9 % en poids d'au moins un acide carboxylique en C₁₂₋₂₈, ainsi que
jusqu'à 79,9 % en poids d'une cire de paraffine ou d'un mélange de cires de paraffine présentant un point de solidification non inférieur à 25 °C.

8. Régulateur du moussage selon une des revendications 1 à 5, caractérisé en ce que la substance active antimousse est un mélange de
0,1 à 30 % en poids d'une cétone à longue chaîne présentant des radicaux alkyle ou alcényle avec au total au moins 25 atomes de C, et
70 à 99,9 % en poids d'une cire de paraffine ou d'un mélange de cires de paraffine solide à la température ambiante, qui est sous forme liquide à 100 % en poids à une température inférieure à 90 °C.

9. Régulateur du moussage selon une des revendications 1 à 5, caractérisé en ce que la substance active antimousse est un mélange de paraffine, le cas échéant en mélange avec des bisamides et de l'organospolysiloxane, éventuellement en mélange avec de l'acide silicique rendu hydrophobe, en rapport pondéral de 10:1 à 1:10, en particulier de 7:3 à 1:7,5.

10. Régulateur du moussage selon une des revendications 5 à 9, caractérisé en ce que la cire de paraffine contenue dans la substance active antimousse présente à 30 °C une fraction liquide inférieure à 10 % en poids, à 40 °C, une fraction liquide inférieure à 30 %, à 60 °C, une fraction liquide de 30 à 60 % en poids, à 80 °C, une fraction liquide de 80 à 100 % en poids, et à 90 °C, une fraction liquide de 100 % en poids.

11. Régulateur du moussage selon la revendication 10, caractérisé en ce que la cire de paraffine présente à 30 °C une fraction liquide inférieure de 2 à 5 % en poids, à 40 °C, une fraction liquide de 5 à 25 % en poids, en particulier de 5 à 15 % en poids, et à 60 °C, une fraction liquide de 40 à 55 % en poids.

12. Régulateur du moussage selon une des revendications 1 à 5, caractérisé en ce que la substance active antimousse est un mélange d'un organopolysiloxane avec de l'acide silicique à fines particules et qu'il présente une viscosité à température ambiante comprise dans l'intervalle de 25 000 à 38.000 mPa.s.

13. Régulateur du moussage selon une des revendications 1 à 12, caractérisé en ce que la matière porteuse contient des alcalis de lavage, en particulier un carbonate de métal alcalin, des substances adjuvantes, en particulier de l'aluminosilicate, un silicate stratifié, en particulier, de la bentonite, un polymère soluble ou gonflable dans l'eau, en particulier de l'amidon, un polycarboxylate polymère et/ou un éther cellulosique.

14. Procédé de préparation de régulateurs du moussage en granulés avec une densité en vrac comprise dans l'intervalle de 700 à 1100 g/l, caractérisé en ce que l'on comprime en boudins un prémélange homogène de matière porteuse et de substance active antimousse via des moules perforés avec des largeurs d'ouverture comprises dans l'intervalle de 0,5 à 5 mm, à des pressions de 25 à 200 bars, le cas échéant en présence d'un adjuvant de plastification, tronçonne le boudin après la sortie du moule perforé à l'aide d'un dispositif de coupe à une longueur, qui s'écarte de moins de 20 % du diamètre du moule perforé, et traite éventuellement le produit d'extrusion dans un appareil à arrondir, le cas échéant, en co-utilisant des agents de poudrage.
